# EUROPEAN PATENT APPLICATION

(11) **EP 4 524 167 A1**
(43) Date of publication of application: **19.03.2025**
(21) Application number: 23803188.4
(22) Date of filing: 12.01.2023
(51) Int. Cl.: C08F 210/16, C08F 210/14, C08F 210/18, C08F 255/08, C08J 3/20, C08L 21/00, C08L 23/08, C08L 23/20

(54) **COPOLYMER, RUBBER COMPOSITION, TIRE, AND COPOLYMER PRODUCTION METHOD**

(30) Priority: 10.05.2022 JP 2022077780; 10.05.2022 JP 2022077778
(71) Applicant: BRIDGESTONE CORPORATION, Chuo-ku Tokyo 104-8340 (JP)
(72) Inventor: TARDIF Olivier, Tokyo 104-8340 (JP); KOTANI Kyohei, Tokyo 104-8340 (JP); SONE Ryota, Tokyo 104-8340 (JP)
(74) Representative: Marks & Clerk LLP
(86) International application number: PCT/JP2023/000672
(87) International publication number: WO 2023/218696

(57) **Abstract**

To provide a rubber component with excellent degradation resistance properties. A copolymer includes ethylene units, α-olefin units with six or more carbon atoms, non-conjugated diene units, and aromatic vinyl units.

## Description

### TECHNICAL FIELD

The present disclosure relates to a copolymer, a rubber composition, a tire, and a method for manufacturing a copolymer.

### BACKGROUND

For rubber products such as tires, the development of elastomers (rubber components) with excellent degradation resistance properties is being pursued to suppress performance deterioration over time. For example, techniques to reduce the amount of double bonds in the polymer by changing the monomer proportion when synthesizing EPDM (ethylene-propylene-diene rubber) or hydrogenation techniques to reduce the amount of double bonds after synthesizing diene-based copolymers have been studied.

PTL 1, for example, discloses that a rubber composition with excellent heat aging resistance can be obtained by using a certain copolymer rubber and a diene-based rubber in a certain ratio.

### CITATION LIST

PTL 1: JPH08-337694A

### SUMMARY

### (Technical Problem)

However, none of the conventional rubber techniques mentioned above have achieved sufficient degradation resistance properties, and a further improvement in degradation resistance properties is still required.

Accordingly, an object of the present disclosure is to solve the problem of the above conventional technique, and to provide a rubber component with excellent degradation resistance properties and a method for manufacturing the same.

Additionally, a further object of the present disclosure is to provide a rubber composition and a tire with excellent degradation resistance properties including such a rubber component.

### (Solution to Problem)

As a result of extensive research to solve the above problem, the present inventors found that a novel elastomer (rubber component) with excellent degradation resistance properties can be obtained through synthesis using certain monomers, and thus completed the present disclosure.

The main features of the present disclosure for resolving the above problem are as follows.
[1] A copolymer comprising ethylene units, α-olefin units with six or more carbon atoms, non-conjugated diene units, and aromatic vinyl units.
[2] The copolymer according to [1], wherein a proportion of the ethylene units is 75 mol% or less, a proportion of the α-olefin units is 20 mol% or more, a proportion of the non-conjugated diene units is 1.0 mol% or more, and a proportion of the aromatic vinyl units is 0.5 mol% or more.
[3] The copolymer according to [1] or [2], comprising:
   a main chain part having ethylene units, α-olefin units with six or more carbon atoms, non-conjugated diene units, and aromatic vinyl units, and
   a branched chain part having conjugated diene units bonded to the main chain part.
[4] The copolymer according to [3], wherein a proportion of the ethylene units is 75 mol% or less, a proportion of the α-olefin units is 20 mol% or more, a proportion of the non-conjugated diene units is 1.0 mol% or more, and a proportion of the aromatic vinyl units is 0.5 mol% or more, in the main chain part.
[5] The copolymer according to [3] or [4], wherein a weight average molecular weight of the copolymer is 200,000 or more, and a proportion of the branched chain part in the copolymer is 1 mass% or more.
[6] The copolymer according to any one of [1] to [5], wherein a weight average molecular weight is 200,000 or more.
[7] The copolymer according to any one of [1] to [6], wherein the aromatic vinyl units include 4-methylstyrene units.
[8] The copolymer according to any one of [1] to [7], wherein a molecular weight distribution is 4.0 or less.
[9] A rubber composition comprising the copolymer according to any one of [1] to [8].
[10] A tire comprising the rubber composition according to [9].
[11] A method for manufacturing the copolymer according to any one of [1] to [8], comprising the step of:
   copolymerizing ethylene, an α-olefin compound with six or more carbon atoms, a non-conjugated diene compound, and an aromatic vinyl compound.
[12] A method for manufacturing the copolymer according to any one of [3] to [5], comprising:
   a step A of copolymerizing ethylene, an α-olefin compound with six or more carbon atoms, a non-conjugated diene compound, and an aromatic vinyl compound to obtain a prepolymer corresponding to the main chain part; and
   a step B of graft polymerizing the prepolymer obtained in the step A with a conjugated diene compound to introduce the branched chain part.

### (Advantageous Effect)

According to the present disclosure, a rubber component with excellent degradation resistance properties and a method for manufacturing the same can be provided.

Moreover, according to the present disclosure, a rubber composition and a tire with excellent degradation resistance properties can be provided using such a rubber component.

### DETAILED DESCRIPTION

A copolymer, a rubber composition, a tire, and a method for manufacturing a copolymer of the present disclosure are described below in detail with reference to embodiments thereof.

In this specification, unless otherwise specified, "X unit" refers to a unit derived from a compound "X" as a monomer concerning copolymers and the like.

The compounds described in this specification may be partially or entirely derived from fossil resources, biological resources such as plant resources, or recycled resources such as used tires. They may also be derived from mixtures of two or more of fossil resources, biological resources, or recycled resources.

### <Copolymer>

A copolymer of one embodiment of the present disclosure (hereinafter sometimes referred to as "copolymer A of the present embodiment") includes ethylene units, α-olefin units with six or more carbon atoms, non-conjugated diene units, and aromatic vinyl units. Since the copolymer A of the present embodiment contains at least four certain monomer units in this manner, it can exhibit high degradation resistance properties.

The copolymer A of the present embodiment can be manufactured according to the method for manufacturing a copolymer described below.

As mentioned above, the copolymer A of the present embodiment has at least ethylene units. These ethylene units are derived from ethylene as a monomer.

The proportion of ethylene units in the copolymer A is preferably 75 mol% or less. When the proportion of ethylene units in the copolymer A is 75 mol% or less, the flexibility as rubber is not impaired. From a similar viewpoint, the proportion of ethylene units in the copolymer A is more preferably 70 mol% or less, and even more preferably 65 mol% or less. The proportion of ethylene units in the copolymer A is not particularly limited but can be 10 mol% or more, 15 mol% or more, or 20 mol% or more.

The copolymer A of the present embodiment has at least α-olefin units. These α-olefin units are derived from an α-olefin compound with six or more carbon atoms as a monomer. By using an α-olefin compound with six or more carbon atoms, it is possible to significantly suppress the gelation between the copolymer and the re-crosslinking of sulfur after vulcanization. Examples of the α-olefin compound with six or more carbon atoms include 4-methyl-1-pentene, 3-methyl-1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, and 1-octadecene. One type of α-olefin unit (α-olefin compound) may be used alone or a combination of two or more types of these may be used. The α-olefin compound is not particularly limited but is preferably one with 20 or fewer carbon atoms. Specifically, from the viewpoint of obtaining the desired effect more reliably and synthesizing the copolymer more easily, it is preferable that α-olefin units include at least one of 1-octene units, 1-dodecene units, and 1-octadecene units, and it is more preferable that α-olefin units include 1-octene units.

The proportion of α-olefin units in the copolymer A of the present embodiment is preferably 20 mol% or more. When the proportion of α-olefin units in the copolymer A is 20 mol% or more, it is possible to more effectively suppress the above-described gelation and re-crosslinking. From a similar viewpoint, the proportion of α-olefin units in the copolymer A is more preferably 25 mol% or more, and even more preferably 30 mol% or more. The proportion of α-olefin units in the copolymer A is not particularly limited but can be 60 mol% or less, 55 mol% or less, or 50 mol% or less.

The copolymer A of the present embodiment has at least non-conjugated diene units. These non-conjugated diene units are derived from a non-conjugated diene compound as a monomer. By having such non-conjugated diene units, one carbon-carbon double bond per unit remains in the copolymer, which can become a reaction point with sulfur. Examples of the non-conjugated diene compound include 5-ethylidene-2-norbornene, dicyclopentadiene, 1,4-hexadiene, cyclooctadiene, 5-vinyl-2-norbornene, 4,8-dimethyl-1,4,8-decatriene, and 4-ethylidene-8-methyl-1,7-nonadiene. One type of non-conjugated diene unit (non-conjugated diene compound) may be used alone or a combination of two or more types of these may be used. Particularly, from the viewpoint of obtaining the desired effect more reliably, it is preferable that the non-conjugated diene units include 5-ethylidene-2-norbornene units.

The proportion of non-conjugated diene units in the copolymer A of the present embodiment is preferably 1.0 mol% or more. When the proportion of non-conjugated diene units in the copolymer A is 1.0 mol% or more, it is possible to sufficiently promote sulfur vulcanization. From a similar viewpoint, the proportion of non-conjugated diene units in the copolymer A is more preferably 1.5 mol% or more, and even more preferably 2.0 mol% or more. The proportion of non-conjugated diene units in the copolymer A is not particularly limited but can be 10 mol% or less, 8 mol% or less, or 5 mol% or less from the viewpoint of further improving degradation resistance properties.

The copolymer A of the present embodiment has at least aromatic vinyl units. These aromatic vinyl units are derived from an aromatic vinyl compound as a monomer. The aromatic vinyl compound refers to an aromatic compound substituted at least by a vinyl group. Examples of the aromatic vinyl compound include styrene, α-methylstyrene, 2-methylstyrene (o-methylstyrene), 3-methylstyrene (m-methylstyrene), 4-methylstyrene (p-methylstyrene), 2,4-dimethylstyrene, 2-ethylstyrene, 3-ethylstyrene, and 4-ethylstyrene. One type of aromatic vinyl unit (aromatic vinyl compound) may be used alone or a combination of two or more types of these may be used. The aromatic vinyl compound is preferably one with one substituent vinyl group from the viewpoint of more effectively improving degradation resistance properties. Moreover, from the viewpoint of obtaining the desired effect more reliably and facilitating the introduction of branching chains during the manufacturing of the copolymer A1 (described later), it is preferable that the aromatic vinyl compound has alkyl groups (such as methyl, ethyl, propyl, butyl groups). From a similar viewpoint, it is preferable that the aromatic vinyl compound does not include styrene. Particularly, from a similar viewpoint, it is more preferable that aromatic vinyl units include 4-methylstyrene units.

The proportion of aromatic vinyl units in the copolymer A of the present embodiment is preferably 0.5 mol% or more. When the proportion of non-conjugated diene units in the copolymer A is 0.5 mol% or more, it is possible to further improve degradation resistance properties. From a similar viewpoint, the proportion of aromatic vinyl units in the copolymer A is more preferably 0.8 mol% or more, and even more preferably 1 mol% or more. The proportion of aromatic vinyl units in the copolymer A is not particularly limited but can be 5 mol% or less, 3 mol% or less, or 2 mol% or less.

The copolymer A of the present embodiment may have other units besides the above-mentioned units. However, from the viewpoint of obtaining the desired effect more reliably, the proportion of the other units in the copolymer A is preferably 5 mol% or less, more preferably 2 mol% or less, and even more preferably substantially 0 mol% (such other units are not included).

In a preferred example of the present embodiment, the proportion of the ethylene units in the copolymer A is 75 mol% or less, the proportion of the α-olefin units is 20 mol% or more, the proportion of the non-conjugated diene units is 1.0 mol% or more, and the proportion of the aromatic vinyl units is 0.5 mol% or more.

The number average molecular weight (Mn) of the copolymer A in the present embodiment is preferably 100,000 or more. When the number average molecular weight (Mn) of the copolymer A is 100,000 or more, the crosslinking ability improves. From a similar viewpoint, the number average molecular weight (Mn) of the copolymer A is more preferably 150,000 or more, and even more preferably 200,000 or more. The number average molecular weight (Mn) of the copolymer A is not particularly limited, but it is preferably 600,000 or less, and more preferably 500,000 or less.

The weight average molecular weight (Mw) of the copolymer A in the present embodiment is preferably 200,000 or more. When the weight average molecular weight (Mw) of the copolymer A is 200,000 or more, the crosslinking ability improves. From a similar viewpoint, the weight average molecular weight (Mw) of the copolymer A is more preferably 400,000 or more. The weight average molecular weight (Mw) of the copolymer A is not particularly limited, but it is preferably 800,000 or less, and more preferably 600,000 or less.

The molecular weight distribution (Mw/Mn) of the copolymer A in the present embodiment is preferably 4.0 or less. When the molecular weight distribution (Mw/Mn) of the copolymer A is 4.0 or less, sufficient homogeneity in the physical properties of the copolymer can be achieved. From a similar viewpoint, the molecular weight distribution (Mw/Mn) of the copolymer A is more preferably 3.5 or less, and even more preferably 3.0 or less. The molecular weight distribution (Mw/Mn) of the copolymer A is not particularly limited, but it is preferably 1.5 or more, and more preferably 1.8 or more.

The above-mentioned number average molecular weight (Mn), weight average molecular weight (Mw), and molecular weight distribution (Mw/Mn) are determined using gel permeation chromatography (GPC) with polystyrene as the standard substance.

### <Copolymer of One Preferred Aspect>

Next, a copolymer of one preferred aspect included in the range of "the copolymer A of the present embodiment" described above will be explained. This copolymer (hereinafter sometimes referred to as "the copolymer A1") comprises a main chain part having ethylene units, α-olefin units with six or more carbon atoms, non-conjugated diene units, and aromatic vinyl units, and a branched chain part having conjugated diene units bonded to the main chain part. In other words, this copolymer A1 can be referred to as a graft polymer. By introducing branched chains with conjugated diene units into the main chain with at least four certain monomer units, the copolymer A1 of the present embodiment can exhibit high degradation resistance properties while having an excellent low-loss property.

The copolymer A1 of the present embodiment can be manufactured according to the method for manufacturing a copolymer of the present disclosure described later.

### (Main Chain Part)

As mentioned above, the main chain part of the copolymer A1 of the present embodiment has at least ethylene units. These ethylene units are derived from ethylene as a monomer.

The proportion of ethylene units in the main chain part of the copolymer A1 of the present embodiment is preferably 75 mol% or less. When the proportion of ethylene units in the main chain part is 75 mol% or less, the flexibility as rubber is not impaired. From a similar viewpoint, the proportion of ethylene units in the main chain part is more preferably 70 mol% or less, and even more preferably 65 mol% or less. The proportion of ethylene units in the main chain part is not particularly limited, but it can be 10 mol% or more, 15 mol% or more, or 20 mol% or more.

The main chain part of the copolymer A1 of the present embodiment has at least α-olefin units. The specific explanation of these α-olefin units is the same as previously described for the copolymer A, and therefore omitted. The proportion of α-olefin units in the main chain part of the copolymer A1 of the present embodiment is preferably 20 mol% or more. When the proportion of α-olefin units in the main chain part is 20 mol% or more, it is possible to more effectively suppress the above-described gelation and re-crosslinking. From a similar viewpoint, the proportion of α-olefin units in the main chain part is more preferably 25 mol% or more, and even more preferably 30 mol% or more. The proportion of α-olefin units in the main chain part is not particularly limited, but it can be 60 mol% or less, 55 mol% or less, or 50 mol% or less.

The main chain part of the copolymer A1 of the present embodiment has at least non-conjugated diene units. The specific explanation of these non-conjugated diene units is the same as previously described for the copolymer A, and therefore omitted. The proportion of non-conjugated diene units in the main chain part of the copolymer A1 of the present embodiment is preferably 1.0 mol% or more. When the proportion of non-conjugated diene units in the main chain part is 1.0 mol% or more, it is possible to sufficiently promote sulfur vulcanization. From a similar viewpoint, the proportion of non-conjugated diene units in the main chain part is more preferably 1.5 mol% or more, and even more preferably 2.0 mol% or more. The proportion of non-conjugated diene units in the main chain part is not particularly limited, but it can be 10 mol% or less, 8 mol% or less, or 5 mol% or less from the viewpoint of further improving degradation resistance properties.

The main chain part of the copolymer A1 of the present embodiment has at least aromatic vinyl units. The specific explanation of these aromatic vinyl units is the same as previously described for the copolymer A, and therefore omitted. The proportion of aromatic vinyl units in the main chain part of the copolymer A1 of the present embodiment is preferably 0.5 mol% or more. When the proportion of non-conjugated diene units in the main chain part is 0.5 mol% or more, it is possible to further improve degradation resistance properties. From a similar viewpoint, the proportion of aromatic vinyl units in the main chain part is more preferably 0.8 mol% or more, and even more preferably 1 mol% or more. The proportion of aromatic vinyl units in the main chain part is not particularly limited, but it can be 5 mol% or less, 3 mol% or less, or 2 mol% or less.

The main chain part of the copolymer A1 of the present embodiment may have other units besides the above-mentioned units. However, from the viewpoint of obtaining the desired effect more reliably, the proportion of other units in the main chain part is preferably 5 mol% or less, more preferably 2 mol% or less, and even more preferably substantially 0 mol% (such other units are not included).

In a preferred example of the present embodiment, the proportion of the ethylene units in the main chain part of the copolymer A1 is 75 mol% or less, the proportion of the α-olefin units is 20 mol% or more, the proportion of the non-conjugated diene units is 1.0 mol% or more, and the proportion of the aromatic vinyl units is 0.5 mol% or more.

### (Branched Chain Part)

Moreover, the copolymer A1 of the present embodiment has a branched chain part with conjugated diene units, bonded to the above-described main chain part. These conjugated diene units are derived from a conjugated diene compound as a monomer. The conjugated diene compound preferably has 4 to 10 carbon atoms, for example, and specific examples include 1,3-butadiene, isoprene, 1,3-pentadiene, 2,3-dimethylbutadiene, and myrcene. One type of conjugated diene unit (conjugated diene compound) may be used alone or a combination of two or more types of these may be used. Particularly, from the viewpoint of obtaining the desired effect more reliably and being easily available, conjugated diene units preferably include 1,3-butadiene units or isoprene units, and more preferably include 1,3-butadiene units.

The branched chain part of the copolymer A1 of the present embodiment may have other units besides the conjugated diene units. However, from the viewpoint of obtaining the desired effect more reliably, the proportion of other units in the branched chain part is preferably 5 mol% or less, more preferably 2 mol% or less, and even more preferably substantially 0 mol% (such other units are not included).

In the copolymer A1 of the present embodiment, the proportion of the branched chain part is preferably 1 mass% or more. In other words, in the copolymer A1 of the present embodiment, the proportion of the main chain part is preferably 99 mass% or less. In this case, it is possible to improve low-loss property while exhibiting sufficient crosslinking (vulcanization) ability. From a similar viewpoint, the proportion of the branched chain part in the copolymer A1 is more preferably 3 mass% or more, and even more preferably 5 mass% or more. The proportion of the branched chain part in the copolymer A1 is not particularly limited, but from the viewpoint of maintaining good degradation resistance properties, it is preferably 20 mass% or less, more preferably 15 mass% or less, and can also be 10 mass% or less.

The proportion of the branched chain part in the copolymer A1 can be determined from the increase in weight average molecular weight (Mw) before and after the introduction of the branched chain part during the manufacturing of the copolymer A1.

In a preferred example of the present embodiment, the weight average molecular weight of the copolymer A1 is 200,000 or more, and the proportion of the branched chain part in the copolymer A1 is 1 mass% or more.

### <Method for manufacturing Copolymer>

A method for manufacturing a copolymer of one embodiment of the present disclosure (hereinafter sometimes referred to as "the manufacturing method of the present embodiment") is a method for manufacturing the copolymer A described above, which includes the step (copolymerization step) of copolymerizing ethylene, an α-olefin compound with six or more carbon atoms, a non-conjugated diene compound, and an aromatic vinyl compound.

According to the manufacturing method of the present embodiment, it is possible to manufacture the copolymer A (rubber component) with excellent degradation resistance properties. The manufacturing method of the present embodiment may also include, as necessary, a coupling step, a cleaning step, and other steps after the copolymerization step.

In the copolymerization step, the copolymer A having at least ethylene units, α-olefin units, non-conjugated diene units, and aromatic vinyl units is obtained by copolymerizing ethylene, one or more α-olefin compounds with six or more carbon atoms, one or more non-conjugated diene compounds, and one or more aromatic vinyl compounds. In the copolymerization step, other monomers may or may not be used.

Ethylene can be introduced into the reaction system in the gas phase while adjusting the pressure.

The copolymerization step can be carried out by any method that allows the copolymerization of the respective monomers. However, from the viewpoint of promoting the copolymerization reaction, it is preferable to carry out the copolymerization step in the presence of a catalyst composition containing a metal complex represented by the general formula (I) below: 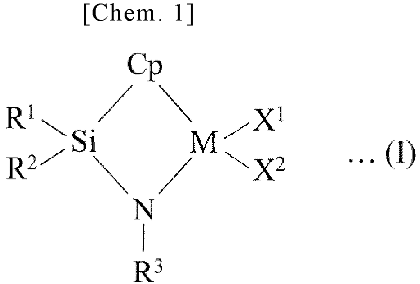 in the formula, M represents a Group 4 element, Cp represents a substituted or unsubstituted cyclopentadienyl group, indenyl group, or fluorenyl group, R¹, R², and R³ each independently represent a hydrocarbon group, and X¹ and X² each independently represent a halogen atom, hydrogen atom, amino group, or hydrocarbon group.

The Group 4 element represented by M in the general formula (I) includes titanium (Ti), zirconium (Zr), hafnium (Hf), and rutherfordium (Rf). Of these, titanium (Ti) is preferable.

Cp in the general formula (I) is preferably an unsubstituted cyclopentadienyl group, indenyl group, or fluorenyl group, and more preferably an unsubstituted cyclopentadienyl group.

Examples of the hydrocarbon groups represented by R¹, R², and R³ in the general formula (I) include, for example, linear or branched aliphatic hydrocarbon groups such as methyl, ethyl, n-propyl, isopropyl, n-butyl, isobutyl, sec-butyl, tert-butyl, neopentyl, hexyl, and octyl groups; aromatic hydrocarbon groups such as phenyl, tolyl, and naphthyl groups; and aralkyl groups such as benzyl groups. Among these, R¹ and R² are preferably hydrocarbon groups having 1 to 6 carbon atoms, more preferably linear or branched aliphatic hydrocarbon groups, even more preferably methyl, ethyl, or tert-butyl groups, and further preferably methyl groups. R³ is preferably a hydrocarbon group having 1 to 6 carbon atoms, more preferably a linear or branched aliphatic hydrocarbon group, even more preferably a methyl, ethyl, or tert-butyl group, and further preferably a tert-butyl group.

Examples of the halogen atoms represented by X¹ and X² in the general formula (I) include, for example, fluorine, chlorine, bromine, and iodine atoms.

Examples of the amino groups represented by X¹ and X² in the general formula (I) include, for example, aliphatic amino groups such as dimethylamino, diethylamino, and diisopropylamino groups; aryl amino groups such as phenylamino, 2,6-di-tert-butylphenylamino, 2,6-diisopropylphenylamino, 2,6-dineopentylphenylamino, 2-tert-butyl-6-isopropylphenylamino, 2-tert-butyl-6-neopentylphenylamino, 2-isopropyl-6-neopentylphenylamino, and 2,4,6-tri-tert-butylphenylamino groups; and bistrialkylsilyl amino groups such as bistrimethylsilyl amino groups.

Examples of the hydrocarbon groups represented by X¹ and X² in the general formula (I) include, for example, linear or branched aliphatic hydrocarbon groups such as methyl, ethyl, n-propyl, isopropyl, n-butyl, isobutyl, sec-butyl, tert-butyl, neopentyl, hexyl, and octyl groups; aromatic hydrocarbon groups such as phenyl, tolyl, and naphthyl groups; and aralkyl groups such as benzyl groups.

Among these, it is preferable that X¹ and X² are chlorine atoms or dimethylamino groups.

In the above copolymerization step, any method such as solution polymerization, suspension polymerization, bulk liquid phase polymerization, emulsion polymerization, gas phase polymerization, or solid phase polymerization can be used. When a solvent is used in the polymerization reaction, any solvent can be used as long as it is inert in the polymerization reaction, and examples include toluene, cyclohexane, and hexane (normal hexane).

In the copolymerization step, the polymerization reaction each takes place in the atmosphere of the inert gas, preferably nitrogen gas or argon gas.

The polymerization temperature of the polymerization reaction is not particularly limited. The polymerization temperature is preferably in the range of, for example, -100°C to 200°C, and may be approximately room temperature.

In addition, in order to bring sufficient raw monomers into the polymerization reaction system, the pressure of the polymerization reaction is preferably 0.1 to 10.0 MPa. The reaction time of the polymerization reaction is not particularly limited. The reaction time is preferably in the range of, for example, 1 second to 10 days, though the reaction time may be selected as appropriate according to conditions such as the type of polymerization catalyst and the polymerization temperature.

In the copolymerization step, the polymerization reaction may be stopped using a polymerization terminator such as methanol, ethanol, or isopropanol.

The coupling step is a step of performing a coupling reaction that modifies at least part (e.g., terminal) of the obtained copolymer. By performing the coupling reaction, the number average molecular weight (Mn) can be increased.

The coupling step is preferably caused to take place when the polymerization reaction reaches 100%.

The coupling agent used in the coupling reaction is not particularly limited and may be selected as appropriate depending on the intended use. Examples thereof may include: a tin-containing compound such as bis(maleic acid-1-octadecyl)dioctyltin(IV); an isocyanate compound such as 4,4'-diphenylmethane diisocyanate; and an alkoxysilane compound such as glycidylpropyltrimethoxysilane, These may be used alone or in combination of two or more. Among them, bis(maleic acid-1-octadecyl)dioctyltin(IV) is preferable in terms of its high reaction efficiency and a low gel-formation property.

The cleaning step is a step of cleaning the obtained copolymer. The cleaning step can suitably reduce catalyst residue in the copolymer. The medium used in the cleaning step is not particularly limited and may be selected as appropriate depending on the intended use thereof. Examples of the medium include methanol, ethanol, and isopropanol.

### <Method for manufacturing copolymer (Copolymer A1) of One Preferred Aspect>

Next, the method for manufacturing the copolymer A1, which is substantially included within the scope of the "manufacturing method of the present embodiment" described above, will be explained. This manufacturing method includes: a step A of copolymerizing ethylene, an α-olefin compound with six or more carbon atoms, a non-conjugated diene compound, and an aromatic vinyl compound to obtain a prepolymer corresponding to the main chain part; and
a step B of graft polymerizing the prepolymer obtained in the step A with a conjugated diene compound to introduce the branched chain part.

According to this manufacturing method, it is possible to manufacture the copolymer A1 (rubber component) with excellent degradation resistance properties and low-loss property.

In the step A, ethylene, one or more α-olefins with six or more carbon atoms, one or more non-conjugated diene compounds, and one or more aromatic vinyl compounds are copolymerized to obtain a prepolymer corresponding to the main chain part of the copolymer, having at least ethylene units, α-olefin units, non-conjugated diene units, and aromatic vinyl units. In the step A, additional monomers may or may not be used.

Since the operation in the step A (main chain formation step) is essentially the same as the copolymerization step in the "manufacturing method of the present embodiment," the explanation is omitted. The prepolymer obtained in the step A is substantially the same as the copolymer A.

Next, in the step B, the prepolymer obtained in the step A is graft polymerized with one or more conjugated diene compounds to introduce the branched chain part having conjugated diene units. This results in the copolymer A1 (graft polymer). In the step B, additional monomers may or may not be used.

The step B (formation step of the branched chain part) can be carried out by any method that allows graft polymerization of the prepolymer with the conjugated diene compound. However, from the viewpoint of promoting graft polymerization, it is preferable that the step B is carried out by anionic polymerization.

In the anionic polymerization, it is preferable to use a lithium compound as the polymerization initiator. Examples of the lithium compound include ethyl lithium, n-propyl lithium, isopropyl lithium, n-butyl lithium, sec-butyl lithium, tert-octyl lithium, n-decyl lithium, phenyl lithium, 2-naphthyl lithium, 2-butylphenyl lithium, 4-phenylbutyl lithium, cyclohexyl lithium, cyclopentyl lithium, and reaction products of diisopropenyl benzene with butyl lithium.

In addition, a lithium amide compound may also be used as the polymerization initiator in the anionic polymerization. Examples of the lithium amide compound include lithium hexamethylene imide, lithium pyrrolidide, lithium piperidide, lithium heptamethylene imide, lithium dodecamethylene imide, lithium dimethylamide, lithium diethylamide, lithium dipropylamide, lithium dibutylamide, lithium dihexylamide, lithium diheptylamide, lithium dioctylamide, lithium di-2-ethylhexylamide, lithium didecylamide, lithium-N-methylpiperazide, lithium ethylpropylamide, lithium ethylbutylamide, lithium methylbutylamide, lithium ethylbenzylamide, and lithium methylphenethylamide.

Using less initiator results in a longer branched chain part, while using more initiator results in a shorter branched chain part. Hence, the amount of the polymerization initiator used can be adjusted as desired depending on the length of the branched chain part.

In the step B, any method such as solution polymerization, suspension polymerization, bulk liquid phase polymerization, emulsion polymerization, gas phase polymerization, or solid phase polymerization can be used. When a solvent is used in the polymerization reaction, any solvent can be used as long as it is inert in the polymerization reaction, and examples include toluene, cyclohexane, and hexane (normal hexane).

In the step B, the polymerization reaction is preferably each caused to take place in the atmosphere of the inert gas, preferably nitrogen gas or argon gas.

The polymerization temperature of the polymerization reaction is not particularly limited. The polymerization temperature is preferably in the range of, for example, -100°C to 200°C, and may be approximately room temperature.

In addition, in order to bring sufficient raw monomers into the polymerization reaction system, the pressure of the polymerization reaction is preferably 0.1 to 10.0 MPa. The reaction time of the polymerization reaction is not particularly limited. The reaction time is preferably in the range of, for example, 1 second to 10 days, though the reaction time may be selected as appropriate according to conditions such as the type of polymerization catalyst and the polymerization temperature.

In the step B, the polymerization reaction may be stopped using a polymerization terminator such as methanol, ethanol, or isopropanol.

After the step B, if necessary, coupling, cleaning, and other steps may be performed. The specific explanation of these steps is omitted as they are the same as previously described in the "manufacturing method of the present embodiment."

### <Rubber Composition>

A rubber composition of the present disclosure includes the above-described copolymer A. Since the rubber composition of the present disclosure includes the above-described copolymer A, it is excellent in degradation resistance properties. In particular, when the copolymer A1 is used as the copolymer A, the rubber composition not only has excellent degradation resistance properties but also exhibits excellent low-loss property. In addition to the copolymer A, the rubber composition of the present disclosure may include other rubber components, a filler, a crosslinking agent, and other components.

Examples of other rubber components include natural rubber (NR), isoprene rubber (IR), butadiene rubber (BR), acrylonitrile-butadiene rubber (NBR), chloroprene rubber, ethylene-propylene rubber (EPM), ethylene-propylene-diene rubber (EPDM), polysulfide rubber, silicone rubber, fluororubber, and urethane rubber. These may be used alone or in combination of two or more.

Examples of the filler include carbon black, silica, aluminum hydroxide, clay, alumina, talc, mica, kaolin, glass balloons, glass beads, calcium carbonate, magnesium carbonate, magnesium hydroxide, magnesium oxide, titanium oxide, potassium titanate, and barium sulfate. These may be used alone or in combination of two or more. Among those, carbon black is preferably used as a filler. The amount (content) of the filler contained in the rubber composition is not particularly limited and may be selected as appropriate depending on the intended use thereof. The content is, however, preferably 10 to 100 parts by mass per 100 parts by mass of the rubber component. When the content of the filler is 10 parts by weight or more, improved reinforcement is achieved by the inclusion of the filler; when the content is 100 parts by weight or less, good workability is maintained. From a similar viewpoint, the content of the filler per 100 parts by weight of the rubber component is more preferably 20 parts by weight or more, and even more preferably 30 parts by weight or more, and preferably 80 parts by weight or less, and even more preferably 60 parts by weight or less.

Examples of the crosslinking agent include sulfur-based crosslinking agents, organic peroxide-based crosslinking agents, inorganic crosslinking agents, polyamine crosslinking agents, resin crosslinking agents, sulfur compound-based crosslinking agents, and oxime-nitrosoamine-based crosslinking agents. Among the above, a sulfur-based crosslinking agent (vulcanizing agent) is more preferable for a rubber composition used in tires. The content (amount) of the crosslinking agent in the rubber composition is not particularly limited and can be appropriately selected according to the intended use, but it is preferably 0.1 to 20 parts by weight per 100 parts by weight of the rubber component.

A vulcanization accelerator may be further used when the vulcanizing agent described above is used. Examples of the vulcanization accelerator include guanidine-based, aldehyde-amine-based, aldehyde-ammonia-based, thiazole-based, sulfenamide-based, thiourea-based, thiuram-based, dithiocarbamate-based, and xanthate-based compounds. Vulcanization accelerators may be used alone, or two or more of these may be used in combination.

Further, the rubber composition of the present disclosure may include, as necessary depending on the intended use, a softener, a vulcanization aid, a colorant, a flame retarder, a lubricant, a foaming agent, a plasticizer, a processing aid, an antioxidant, an age resistor, an antiscorching agent, an anti-ultraviolet agent, an antistatic agent, an anticoloring agent, and other publicly-known compounding agents.

The rubber composition of the present disclosure can be used for applications other than tires, such as vibration damping rubber, seismic isolation rubber, belts, e.g., conveyor belts, rubber crawlers, and various hoses.

### <Tire>

A tire of the present disclosure includes the above-described rubber composition. In other words, the tire of the present disclosure is characterized by the inclusion of the above-described rubber composition. Since such a tire of the present disclosure includes the above-described copolymer A, it is excellent in degradation resistance properties. Particularly when the copolymer A1 is used as the copolymer A, the tire not only has excellent degradation resistance properties but also exhibits superior low-loss property.

The application sites of the rubber composition of the present disclosure in the tire are not particularly limited and can be appropriately selected according to the intended use. Examples include the tread, base tread, sidewall, side reinforcement rubber, and bead filler, but the sidewall is particularly preferred.

The method of producing the above-described tire may be a conventional method. For example, the tire may be produced by successively laminating members that are generally used for the production of tires, such as a carcass layer, a belt layer, and a tread layer which are composed of the unvulcanized rubber composition and/or cord, on a tire molding drum, withdrawing the drum to obtain a green tire, then heating and vulcanizing the green tire with a conventional method to obtain a desired tire (for example, a pneumatic tire).

### EXAMPLES

The present disclosure will be described in more detail below with reference to examples, although the present disclosure is not limited to these examples.

### (Synthesis of Copolymer A)

The following catalyst (metal complex) was used for the synthesis of the copolymer A.

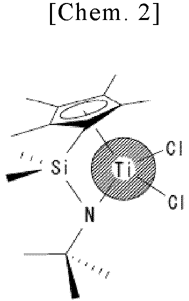

A dried 2000 mL pressure-resistant stainless steel reactor was charged with 600 g of toluene, 62 g of 1-octene as the α-olefin compound with six or more carbon atoms, 13 g of 5-ethylidene-2-norbornene as the non-conjugated diene compound, and 5 g of 4-methylstyrene as the aromatic vinyl compound. Then, 6 mL of modified aluminoxane (Al = 5.6 mass% in hexane solution) was added, and ethylene as the non-conjugated olefin compound was introduced at 0.1 MPa and room temperature for 5 minutes. Into this reactor, 3 µmol of the above-described catalyst (as 10 mL of a toluene solution) was added, and copolymerization was carried out at 50°C for 80 minutes while pressurizing with ethylene at 0.2 MPa.

After copolymerization, 10 mL of an isopropanol solution was added to the reactor to quench the reaction, and the copolymer was separated using a large amount of methanol and vacuum-dried at 50°C to obtain the copolymer A. The yield of the copolymer A obtained was 35 g.

Using a gel permeation chromatography [GPC: HLC-8121GPC/HT manufactured by Tosoh Corporation, column: two GMH_{HR}-H(S)HT manufactured by Tosoh Corporation, and a detector: a differential refractometer (RI)] using monodisperse polystyrene as a reference, the number average molecular weight (Mn), the weight average molecular weight (Mw), and the molecular weight distribution (Mw/Mn) of the obtained copolymer A in terms of polystyrene were obtained. Note that the measurement temperature was 40°C. The resulting copolymer A had an Mn of 220,000, an Mw of 480,000, and a molecular weight distribution of 2.2.

The proportions of each monomer unit in the obtained copolymer A were determined by the integral proportion of each peak in the ¹H-NMR spectrum (100°C, d-tetrachloroethane standard: 6 ppm). As a result, the proportions in the copolymer A were found to be 60.5 mol% ethylene units (27.5 mass%), 34.2 mol% 1-octene units (62.2 mass%), 4.1 mol% 5-ethylidene-2-norbornene units (8.0 mass%), and 1.2 mol% 4-methylstyrene units (2.3 mass%).

### (Synthesis of Copolymer A1 (Graft Polymer))

The main chain part (prepolymer) was obtained in the same procedure as the synthesis of the copolymer A. This main chain part (prepolymer) is substantially the same as the copolymer A described above.

Next, in a dried 1000 mL glass reactor, 22.5 g of the main chain part (prepolymer) obtained above and 250 g of cyclohexane were added and dissolved over 24 hours. Then, 3.9 mL of tetramethylethylenediamine (in a cyclohexane solution, 1M) and 3.9 mL of sec-butyllithium (in a hexane solution, 1M) were added and aging was performed at 50°C for 40 minutes. Then, 2.5 g of 1,3-butadiene as the conjugated diene compound (in a cyclohexane solution, 25 mass%) was added, and the graft reaction was carried out at 50°C for 30 minutes.

After the reaction, 5 mL of a degassed isopropanol solution was added to the glass reactor to quench the reaction, and the product was separated using a large amount of methanol and vacuum-dried at 50°C to obtain the copolymer A1 (graft polymer) with an introduced branched chain part containing 1,3-butadiene units. The yield of the copolymer obtained was 25 g.

Using a gel permeation chromatography [GPC: HLC-8121GPC/HT manufactured by Tosoh Corporation, column: two GMH_{HR}-H(S)HT manufactured by Tosoh Corporation, and a detector: a differential refractometer (RI)] using monodisperse polystyrene as a reference, the number average molecular weight (Mn), the weight average molecular weight (Mw), and the molecular weight distribution (Mw/Mn) of the obtained copolymer A1 (graft polymer) in terms of polystyrene were obtained. The resulting copolymer A1 (graft polymer) had an Mn of 240,000, an Mw of 490,000, and a molecular weight distribution of 2.0. The proportion of the branched chain part in the copolymer A1 (graft polymer) was 10 mass%.

The proportions of each monomer unit in the obtained copolymer A1 (graft polymer) were determined by the integral proportion of each peak in the ¹H-NMR spectrum (100°C, d-tetrachloroethane standard: 6 ppm). As a result, the proportions in the copolymer A1 (graft polymer) were found to be 53.7 mol% ethylene units (24.8 mass%), 30.4 mol% 1-octene units (56.0 mass%), 3.6 mol% 5-ethylidene-2-norbornene units (7.2 mass%), 1.1 mol% 4-methylstyrene units (2.1 mass%), and 11.2 mol% 1,3-butadiene units (10.0 mass%).

### (Preparation of Rubber Composition)

A rubber composition was prepared by conducting primary kneading (non-masterbatch kneading, NR) followed by secondary kneading (masterbatch kneading, P) according to the formulation listed in Table 1. This rubber composition was vulcanized at 160°C to obtain a vulcanized rubber composition. The following evaluations were performed on the obtained vulcanized rubber compositions.

Degradation resistance properties<Degradation Resistance Properties>

A ring-shaped test piece was prepared from each vulcanized rubber composition, and a tensile test was conducted at 23°C according to JIS K 6251 to measure the elongation at break Eb₁ (%) and the modulus at 100% elongation M100₁ (MPa). A vulcanized rubber composition was then placed in a 100°C oven for 2 days, and the elongation at break Eb₂ (%) and the modulus at 100% elongation M100₂ (MPa) were measured in the same manner. The change rate of Eb before and after thermal degradation was calculated as Eb₂/Eb₁ × 100, and the change rate of M100 before and after thermal degradation was calculated as M100₂/M100₁ × 100. The results are listed in Table 1. Values closer to 100 indicate better degradation resistance properties (higher resistance to degradation).

### <Low-Loss Property>

The tanδ of each vulcanized rubber composition sample was measured using a dynamic mechanical analyzer (manufactured by TA Instruments) in torsion mode at a frequency of 15 Hz and a deformation of 1%, with varying temperatures. The value of tanδ at 50°C for each example was indexed, with the value for Comparative Example 1 set to 100. The results are listed in Table 1. Smaller index values indicate a better low-loss property with less hysteresis loss.

**[Table 1]**

| | | | Comp. Ex. 1 | Comp. Ex. 2 | Example 1 | Example 2 |
|---|---|---|---|---|---|---|
| NP | SBR *1 | parts by mass | 100 | 0 | 0 | 0 |
| | EPDM *2 | | 0 | 100 | 0 | 0 |
| | Copolymer A (prepolymer) | | 0 | 0 | 100 | 0 |
| | Copolymer A1 (graft polymer) | | 0 | 0 | 0 | 100 |
| | Carbon black *3 | | 50 | 50 | 50 | 50 |
| | Stearic acid *4 | | 3 | 3 | 3 | 3 |
| P | Zinc flower *5 | parts by mass | 3 | 3 | 3 | 3 |
| | Vulcanization accelerator | | 0.3 | 0.3 | 0.3 | 0.3 |
| | Vulcanization accelerator | | 0.55 | 0.55 | 0.55 | 0.55 |
| | Sulfur *8 | | 1.58 | 1.58 | 1.58 | 1.58 |
| Degradation resistance properties | Change rate of Eb before and after thermal degradation | % | 63 | 80 | 94 | 86 |
| | Change rate of M100 before and after thermal degradation | % | 197 | 134 | 114 | 125 |
| Low-loss property | | Index | 100 | 67 | 69 | 58 |

| | | | | | | |
|---|---|---|---|---|---|---|
| *1 SBR: "Tufdene 2000" manufactured by Asahi Kasei Corporation *2 EPDM: "JSR EP35" manufactured by JSR Corporation *3 carbon black: "Seast F" manufactured by Tokai Carbon Co., Ltd. *4 stearic acid: "Kiri-jirushi Stearic Acid" manufactured by NOF Corporation *5 zinc flower: two types of zinc oxide made by Hakusui Tech Co., Ltd. *6 vulcanization accelerator A: "Sanceler DM-TG" manufactured by Sanshin Chemical Industry Co., Ltd. *7 vulcanization accelerator B: "Sanceler NS-G" manufactured by Sanshin Chemical Industry Co., Ltd. *8 sulfur: "HK200-5" manufactured by Hosoi Chemical Industry Co., Ltd. | | | | | | |

It can be understood from the results in Table 1 that the examples using the copolymer of the present disclosure had higher degradation resistance properties compared to the comparative examples using conventional rubber, with smaller change rates in elongation at break Eb and modulus at 100% elongation M100 before and after thermal degradation. In particular, it was found that the example using the copolymer A1 (graft polymer) exhibited not only high degradation resistance properties but also an excellent low-loss property.

### INDUSTRIAL APPLICABILITY

According to the present disclosure, a rubber component with excellent degradation resistance properties and a method for manufacturing the same can be provided.

Moreover, according to the present disclosure, a rubber composition and a tire with excellent degradation resistance properties can be provided using such a rubber component.

## Claims

1. A copolymer comprising ethylene units, α-olefin units with six or more carbon atoms, non-conjugated diene units, and aromatic vinyl units.

2. The copolymer according to claim 1, wherein a proportion of the ethylene units is 75 mol% or less, a proportion of the α-olefin units is 20 mol% or more, a proportion of the non-conjugated diene units is 1.0 mol% or more, and a proportion of the aromatic vinyl units is 0.5 mol% or more.

3. The copolymer according to claim 1, comprising:
a main chain part having ethylene units, α-olefin units with six or more carbon atoms, non-conjugated diene units, and aromatic vinyl units, and
a branched chain part having conjugated diene units bonded to the main chain part.

4. The copolymer according to claim 3, wherein a proportion of the ethylene units is 75 mol% or less, a proportion of the α-olefin units is 20 mol% or more, a proportion of the non-conjugated diene units is 1.0 mol% or more, and a proportion of the aromatic vinyl units is 0.5 mol% or more, in the main chain part.

5. The copolymer according to claim 3 or 4, wherein a weight average molecular weight of the copolymer is 200,000 or more, and a proportion of the branched chain part in the copolymer is 1 mass% or more.

6. The copolymer according to claim 1 or 3, wherein a weight average molecular weight is 200,000 or more.

7. The copolymer according to claim 1 or 3, wherein the aromatic vinyl units include 4-methylstyrene units.

8. The copolymer according to claim 1 or 3, wherein a molecular weight distribution is 4.0 or less.

9. A rubber composition comprising the copolymer according to claim 1 or 3.

10. A tire comprising the rubber composition according to claim 9.

11. A method for manufacturing the copolymer according to claim 1 or 2, comprising the step of:
copolymerizing ethylene, an α-olefin compound with six or more carbon atoms, a non-conjugated diene compound, and an aromatic vinyl compound.

12. A method for manufacturing the copolymer according to claim 3 or 4, comprising:
a step A of copolymerizing ethylene, an α-olefin compound with six or more carbon atoms, a non-conjugated diene compound, and an aromatic vinyl compound to obtain a prepolymer corresponding to the main chain part; and
a step B of graft polymerizing the prepolymer obtained in the step A with a conjugated diene compound to introduce the branched chain part.
